# EUROPEAN PATENT APPLICATION

(11) **EP 2 002 712 A1**
(43) Date of publication of application: **17.12.2008**
(21) Application number: 08157437.8
(22) Date of filing: 02.06.2008
(51) Int. Cl.: A01K 61/00

(54) **Mussel float**

(30) Priority: 13.06.2007 BE 200700295
(71) Applicant: Deceuninck NV, 8830 Hooglede-Gits (BE)
(72) Inventor: Huyghe, Wilfried, 8800, Roeselare (BE)
(74) Representative: Mooij, Johannes Jacobus

(57) **Abstract**

The invention refers to a mussel float consisting of a shaft that contains ballast in its lower part, wherein the shaft has a skin consisting of virgin hard PVC. The shaft preferably consists of a square tubular profile, with a core of foamed, optionally recycled, PVC and a skin of hard virgin PVC.

## Description

The invention relates to a mussel float consisting of a central shaft, closed at the top side, and of which the bottom part contains ballast material.

Such a mussel float is known from the internet publication "Mosselkweek bij offshore windparken" by Ir. H. Boon, www.e-connection.nl and is used as substrate for mussel cultivation.
Boon describes a mussel float consisting of a round wooden shaft, closed at the top side and with a length of 5 meters, of which the lower side is provided with a ballast in the form of a given quantity of sand. At the top side the float is provided with a quantity of styropore, which increases the floating capability of the float.

NL 1023287 describes a system to grow mussels in open sea that consists of a rod that keeps its upright position in the water with the help of a ballast and of which the largest part remains under the surface of the water. The rod can be made out of solid material or in principle of any material of which the specific mass is lower than that of (sea)water.

The shaft of the mussel float is equipped with a rope, e.g. a natural fiber rope, onto which the mussel seed is applied. The function of the mussel float is to provide a substrate on to which the mussels can attach themselves and which remains just below the water line. Just below the water line, the mussel finds the most nourishing water, resulting in an optimal growth.

it is known that mussels are considered as an indicator of bio-contamination. This made it possible to develop a test to detect and characterize based on the stress level of the mussel, the nature of pollution in marine sediment and suspended material in seawater. It is also known that the growth and quality of a mussel improves when grown in an environment with the least possible stress level.

Said known systems to growth mussels generally result in a high stress level, and consequently in a lower yield.

In the case of a first system, mostly used in France, the growing of mussels is done on rods which are placed alongside the water line and thereby subject to tides. Because of this, the mussels culture is subjected to dry periods and, together for instance with the warmth of the sun, subjected to heavy stress. Consequently, they show severe delay in development compared with mussels that are grown underneath the sea line. Moreover, this system requires a lot of shorelines.

In the case of a second system, mostly used in Zeeland, the mussels are cultivated on sand or on a soil substrate. A drawback of this system is that there is more risk of soil pollution, which leads not only to stress but also possibly reduces the quality of the mussel culture. Besides, mussels are less well filtered in this system.

In the case of a third system, recently developed for the so-called 'Belgian mussels' the mussels are being cultivated on a kind of floating container, fixed to a buoy. The drawback of this system is that is has problems withstanding storms due i.e. to its size/bulkiness. The size of this system also makes it difficult to handle for transport and harvest. The harvest is therefore extensive, labor-intensive and cannot take place mechanically. Moreover the construction is expensive compared to its yield.

A target of the invention is to provide a substrate for mussel cultivation which offers the mussels a reduced level of stress.
Surprisingly, it has been found that a shaft with a skin made of virgin hard PVC offers the mussels a substrate that substantially reduces the level of stress of the mussels. This is demonstrated by an improvement in growth and quality, in particular compared to substrates made out of wood or other similar material. It appears that in particular the growth of barnacles is largely reduced, resulting in the availability more room for growth of the mussels. Another important factor is that the colonies of barnacles are substantially and even completely repressed, resulting in a better yield compared to a wooden substrate. Moreover, the material used has damping characteristics, acting as a factor to reduce stress, whereby the sea wash doest not propagate as vibrations in the shaft, which is the case for example in more rigid products, such as i.e. wood. The fixation of the mussels onto this hard PVC skin can be considered as ideal, which means just sufficient whereby the growth is optimal through the synergy with the characteristic mentioned earlier. Besides, this fixation is such that the totality of the mussel culture can be harvested practically without damage, through stripping of the shaft, whereas harvesting mussels from wood is far more difficult, resulting in damaged, unsalable mussels. Without being bound by a theory, it can be said that above mentioned factors explain why a mussel float according to the invention offers a yield which is approximately 20% higher than mussel floats made out a wooden pole.

The mussel float according to the invention can always be re-used without significant marks of wear, which is a major advantage compared to wooden floats. The thickness of the skin of hard virgin PVC preferably amount to min. 0.5 mm, in order to prevent damages during the stripping. A skin exceeding 3 mm does not contribute to improving the resistance against damages and has the drawback that it uselessly increases the weight of the shaft. As a result, it reduces he floating capability and needlessly increases the load when the float is being raised during harvest.

A further benefit of PVC is that is does not rot, swell or deform in sea water. The latter improves the possibility to harvest the mussels mechanically. Wood on the contrary is much more difficult to strip en is quickly damaged during harvest. Because of the low weight of the mussel float according to the invention harvesting of the mussels can take place on the sea.

In addition to the skin it is possible that the shaft also contains a core that increases the mechanical properties of the shaft. The core of the shaft can be made out of various materials, for examples materials with a high stiffness and fracture resistance. The shaft preferably also contains a tube made out of foamed, possibly recycled, PVC.

A benefit resulting from a core made out of foamed PVC with a density lower than 1000 kg/m3 is that it increases the floating capability of the shaft in case water would penetrate into the shaft.

Another benefit of a foamed PVC core combined with a skin of hard PVC is that the entire construction is 100% recyclable. The hard PVC used for the skin of the mussel float according to the invention is preferably stabilized on the basis of calcium-zinc.

The quantity of mussels that can be harvest also depends on the total length of the rope that is wrapped around the shaft. The weight of this quantity of mussels may not exceeds the floating capability of the shaft, to avoid that the floater disappears to the bottom of the sea.
Mussel floats are set out to sea in a parcel for which a license is being issued based on unit of surface. Therefore, it is important to optimize the return per unit of surface.

A drawback of the float of Boon is that its floating capability is relatively low, whereby the quantity of mussels that can be cultivated on one single shaft and consequently per square meter parcel is restricted.

The present invention is also aiming at providing a float that allows to increase the quantity of mussels that can be cultivated per square meter parcel.

This is achieved by surrounding the closed shaft around the top with a floating element situated outside the shaft.

The mussel float according to the invention in this way provides a substrate that allows to cultivate a quantity of mussels per square meter parcel which is substantially higher than the quantity cultivated at known mussels floats.

In order to guarantee a good flow of the sea water containing the nutrients, the floats onto which the mussels have fixated themselves need to have a certain distance to each other. The room created in this way between the floats is used in the float according to the invention to increase its floating capability and consequently the quantity of mussels that can be cultivated on a float. An additional advantage from the fact that the float according to the invention can carry a larger quantity of mussels is that the handling required for lifting the floats for the harvest of a given quantity of mussels is substantially lower that with the known float.

The floating element situated outside the shaft in the float according to the invention can be a floating element placed around the shaft formed by a round or square article made out of a material with a density smaller than 1000 kg/m³. For example, the article can be a wooden or plastic float or a hollow metal float.

The shaft should preferably consist of a square tubular profile and the floating element is preferably formed by at least 8 square tubular profiles, closed at the top and bottom side, having the same diameter as the central shaft and a length 1, whereby 1 < L. The length L of the shaft can for example be 6 m., whereas the length 1 of the profiles of the floating element amounts to 1.2 m. An adequate dimension for the edge of the shaft is for example 80 or 100 mm.

In this way, the floating capability at the top side of the mussel float is increased to such an extend that, due to the weight increase resulting from the growth of the mussels, the vertical position of the float versus the water surface hardly changes.

The square profiles consist preferably of a core of recycled foamed PVC surrounded by a skin of virgin hard PVC.

## Claims

1. Mussel float consisting of a shaft of which the lower part contains a ballast, **characterized in that** the shaft has a skin of virgin hard PVC.

2. Mussel float according to claim 1, whereby the shaft also contains a core consisting of a tube made out of foamed, optionally recycled, PVC.

3. Mussel float according to claims 1 or 2, further provided with a floating element situated outside the shaft.

4. Mussels float according to conclusion 3, wherein the shaft is formed by a square tubular profile with length L, and the floating element is formed by at least 8 square tubular profiles, closed at the top and bottom side, having the same diameter as the central shaft and a length 1, whereby 1 < L.

5. Mussel float according to conclusion 4, wherein the square profiles consist of a core of foamed recycled PVC surrounded by a skin out of virgin hard PVC
